# EUROPEAN PATENT APPLICATION

(11) **EP 2 768 225 A1**
(43) Date of publication of application: **20.08.2014**
(21) Application number: 12840432.4
(22) Date of filing: 05.10.2012
(51) Int. Cl.: H04N 13/00, H04N 7/173

(54) **TRANSMISSION DEVICE, TRANSMISSION METHOD, RECEIVING DEVICE AND RECEIVING METHOD**

(30) Priority: 13.10.2011 JP 2011226289
(71) Applicant: Sony Corporation, Tokyo 108-0075 (JP)
(72) Inventor: TSUKAGOSHI, Ikuo, Tokyo 108-0075 (JP)
(74) Representative: Witte, Weller & Partner Patentanwälte mbB
(86) International application number: PCT/JP2012/076050
(87) International publication number: WO 2013/054775

(57) **Abstract**

A container of a predetermined format including a video stream of a single view for the two-dimensional image display and video streams of a plurality of views for the three-dimensional image display in a time division manner is transmitted. For example, the container corresponds to containers of variable formats such as MP4 which is used in the delivery through the Internet, in addition to a transport stream (MPEG-2 TS) adopted in a digital broadcasting standard. The configuration information of a video stream of each view included in the container is inserted in the container.

## Description

### Technical Field

The present technology relates to a transmission device, a transmission method, a reception device and a reception method, and in particular, relates to a transmission device which transmits video streams of respective views for a two-dimensional image display and a three-dimensional image display in a time division manner, and the like.

### Background Art

In general, various types of systems which display various three-dimensional images (stereoscopic images) have been known. For example, as described in PTL 1, a method has been known which displays a left image and a right image, having a parallax therebetween, on a display alternately at a predetermined cycle, and observes the left image and the right image with shutter glasses including a liquid crystal shutter which is driven in synchronism with the display.

### Citation List

### Patent Literature

PTL 1: Japanese Unexamined Patent Application Publication No. 9-138384

### Summary of Invention

### Technical Problem

When it is assumed that content such as a television program is transmitted from a broadcast station to a television receiver of a user, it has been considered that video streams of a plurality of views for a three-dimensional (3D) image display and a video stream of a single view for a two-dimensional (2D) image display are switched and displayed.

For example, a case has been considered in which the video streams of a plurality of views for the three-dimensional image display are transmitted for the main part of an event (program) and the video stream of a single view for the two-dimensional image display is transmitted for a commercial message (CM). In addition, for example, a case has been considered in which the video stream of a single view for the two-dimensional image display is transmitted for a certain event (program) and the video streams of a plurality of views for the three-dimensional image display are transmitted in at least a part of a period for other events (programs).

In this case, it is preferable that a television receiver on the user side identify a configuration of the video streams which are transmitted from the transmission side. In other words, if identification of such a video stream configuration is possible, it is possible to perform a proper and efficient process.

It is desired that the reception side is able to perform a proper and efficient process.

### Solution to Problem

The present technology provides a transmission device including:
a transmission unit that transmits a container of a predetermined format in which a video stream of a single view for a two-dimensional image display and video streams of a plurality of views for a three-dimensional image display are included in a time division manner; and
a configuration information insertion unit that inserts configuration information of a video stream of each view included in the container, in the container.

In the present technology, a container of a predetermined format including the video stream of a single view for the two-dimensional image display and the video streams of a plurality of views for the three-dimensional image display in a time division manner is transmitted by a transmission unit. For example, the container may be a transport stream (MPEG-2 TS) adopted in a digital broadcasting standard. Further, for example, a plurality of views for a three-dimensional image display may be two views of a left view and a right view.

The configuration information of a video stream of each view included in a container is inserted in the container by the configuration information insertion unit. For example, the configuration information may include information for identifying whether a video stream included in the container is the video stream of a single view for the two-dimensional image display or the video streams of the plurality of views for the three-dimensional image display.

Further, for example, the configuration information may include information indicating whether or not video streams of the plurality of views are inserted in a single video elementary stream. Further, for example, the configuration information may include information indicating whether or not data of video streams of the plurality of views is interleaved in a single picture.

Further, for example, the configuration information may include information indicating view allocation. Further, for example, the configuration information may include information indicating whether or not a video stream has a view required for the two-dimensional image display. Further, for example, the configuration information may include pixel ratio information regarding a predetermined horizontal and/or vertical resolution.

In this manner, in the present technology, the configuration information of a video stream of each view included in a container is inserted in the container, and thus a proper and efficient process is possible in a reception side.

In addition, the present technology may further include, for example, an insertion layer selection unit that selects a single or a plurality of layers in which the configuration information is inserted. For example, a layer of the container and a layer of the video stream are included in an option of an insertion layer of the configuration information. In this case, the configuration information can be inserted in the layer required according to the service and it is possible to achieve the convenience of a process at the reception side.

Further, in the present technology, for example, when video streams of the plurality of views are inserted in a single video elementary stream, information indicating a boundary between views may be located between video streams of respective views.

Further, other concept of the present technology is a reception device including:
a reception unit that receives a container of a predetermined format in which a video stream of a single view for a two-dimensional image display and video streams of a plurality of views for a three-dimensional image display are included in a time division manner,
wherein configuration information of a video stream of each view included in the container is inserted in the container, and
wherein the reception device further includes an image data acquisition unit that decodes a video stream of each view to acquire image data, based on the configuration information, from the container.

In the present technology, a container of a predetermined format including a video stream of a single view for a two-dimensional image display and video streams of a plurality of views for a three-dimensional image display in a time division manner is received by a reception unit. The configuration information of a video stream of each view included in a container is inserted in the container. Then, a video stream of each view is decoded based on the configuration information and image data is obtained by the image data acquisition unit. At this time, the decoded buffer area is secured based on the configuration information which is inserted, for example, in an event unit or in a time unit smaller than the event unit.

For example, when the video stream of a single view for the two-dimensional image display is transmitted correspondingly to entire period of the event (program), a decoded buffer area for buffering of a video stream of the single view is secured. In contrast, when the video streams of a plurality of views for the three-dimensional image display are transmitted correspondingly in at least a part of a period for the event (program), a decoded buffer area for buffering of video streams of the plurality of views is secured.

In this manner, in the present technology, a video stream of each view is decoded based on the configuration information of a video stream of each view included in a container to obtain image data, and thus a proper and efficient process is possible.

### Advantageous Effects of Invention

According to the present technology, a proper and efficient process is possible in a reception side. Brief Description of Drawings

[Fig. 1] Fig. 1 is a block diagram showing a configuration example of an image transmission and reception system as an embodiment.
[Fig. 2] Fig. 2 is a diagram showing an example in which video streams of two views of the left eye and the right eye for a three-dimensional image display are included in one or two video elementary streams.
[Fig. 3] Fig. 3 is a block diagram showing a configuration example of a transmission data generation unit of a broadcast station constituting the image transmission and reception system.
[Fig. 4] Fig. 4 is a diagram showing an example of an AVC stream including the video streams of two views of the left eye and the right eye in one video elementary stream.
[Fig. 5] Fig. 5 is a diagram showing a configuration example of a transport stream TS in a case where the video streams of two views of the left eye and the right eye for the three-dimensional image display is included in one video elementary stream as a substream.
[Fig. 6] Fig. 6 is a diagram showing a configuration example of a transport stream TS in a case where the video streams of two views of the left eye and the right eye for the three-dimensional image display are respectively included in separate video elementary streams.
[Fig. 7] Fig. 7 is a diagram showing a configuration example of a transport stream TS in a case where the video streams of two views of the left eye and the right eye for the three-dimensional image display are respectively included in separate video elementary streams.
[Fig. 8] Fig. 8 is a diagram showing a structural example (Syntax) of substream configuration descriptor.
[Fig. 9] Fig. 9 is a diagram showing a structural example (Syntax) of "substream_configuration_data()".
[Fig. 10] Fig. 10 is a diagram (1/2) showing contents (Semantics) of each piece of information in a structural example of "substream_configuration_data()".
[Fig. 11] Fig. 11 is a diagram (2/2) showing contents (Semantics) of each piece of information in a structural example of "substream_configuration_data()".
[Fig. 12] Fig. 12 is a diagram for explaining that substream configuration data is inserted in a part of "SEIs" of an access unit as "substream configuration SEI message".
[Fig. 13] Fig. 13 is a diagram showing structural examples (Syntax) of "substream configuration SEI message" and "userdata_for_substream_configuration_data()".
[Fig. 14] Fig. 14 is a diagram showing a structural example (Syntax) of "user_data()".
[Fig. 15] Fig. 15 is a diagram showing a temporal modification example of information included in a substream configuration descriptor and substream configuration data.
[Fig. 16] Fig. 16 is a diagram showing the temporal modification example of information included in the substream configuration descriptor and substream configuration data.
[Fig. 17] Fig. 17 is a diagram showing the temporal modification example of information included in the substream configuration descriptor and substream configuration data.
[Fig. 18] Fig. 18 is a diagram showing the temporal modification example of information included in the substream configuration descriptor and substream configuration data.
[Fig. 19] Fig. 19 is a block diagram showing a configuration example of a receiver constituting the image transmission and reception system.

### Description of Embodiments

Below, modes for carrying out the invention (hereinafter, referred to as "embodiment") will be described. In addition, a description will be made in the following order.
1. Embodiment
2. Modification Example

### <1. Embodiment>

### [Image Transmission and Reception System]

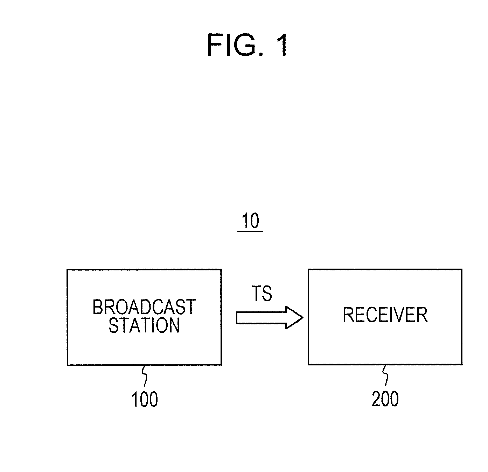

Fig. 1 shows a configuration example of an image transmission and reception system 10 as an embodiment. The image transmission and reception system 10 includes a broadcast station 100 and a receiver 200. The broadcast station 100 transmits a transport stream TS as a container on a broadcast wave.

A video stream of a single view for a two-dimensional image display (image data) and video streams of a plurality of views for a three-dimensional image display (image data) are included in the transport stream TS, in a time division manner. The video streams of the plurality of views for the three-dimensional image display are included in one elementary stream so as to be transmitted, or included in respective separate elementary streams and transmitted. In the embodiment, the plurality of views represent two views including a left view (left image) and a right view (right image).

For example, a case is considered in which the video streams of two views of the left eye and the right eye for the three-dimensional image display are transmitted for the main part of an event (program) and the video stream of the single view for the two-dimensional image display is transmitted for a commercial message (CM). Further, for example, a case is considered in which only the video stream of the single view for the two-dimensional image display is transmitted in a certain event (program), and the video streams of two views of the left eye and the right eye for the three-dimensional image display are transmitted in at least a part of a period, in other events (programs).

The configuration information of a video stream of each view included in a transport stream TS is inserted in the transport stream TS. The configuration information includes information identifying whether a video stream included in a transport stream TS is a video stream of a single view for the two-dimensional image display or video streams of two views of the left eye and the right eye for the three-dimensional image display, or the like.

The configuration information is selectively inserted in a single or a plurality of layers of the transport stream TS. An option of insertion layer includes, for example, a layer of a transport stream. In this case, the configuration information is inserted under a Video Elementary Loop (Video ES loop) of a Program Map Table (PMT) included in the transport stream TS, under an Event Information Table (EIT), or the like.

Further, the option of insertion layer includes, for example, layers (a picture layer and a sequence layer) of a video stream. In this case, the configuration information is inserted in a user data area of a picture header or a sequence header of the video stream, or the like. The details of the configuration information will be described later.

The receiver 200 receives a transport stream TS which is transmitted on a broadcast wave from the broadcast station 100. Further, the receiver 200 extracts the configuration information which is inserted in the received transport stream TS. Then, the receiver 200 obtains the video stream (image data) from the received transport stream TS, based on the configuration information.

In other words, when the transport stream TS includes the video stream of a single view for the two-dimensional image display (image data), the receiver 200 obtains the video stream of the single view. Further, when the transport stream TS includes the video streams of two views of the left eye and the right eye for the three-dimensional image display (image data), the receiver 200 obtains the video streams of the two views.

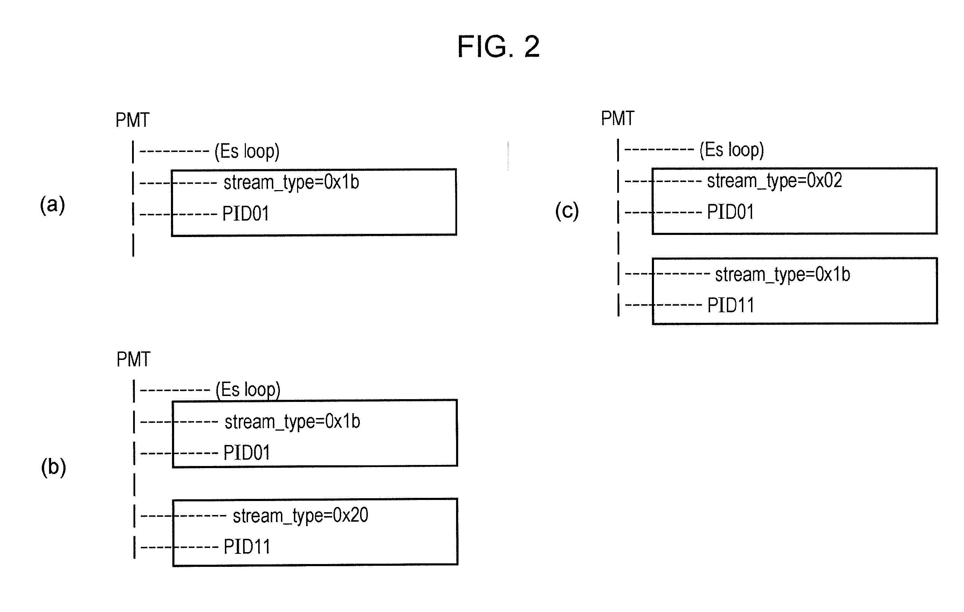

Fig. 2(a) shows an example in which the video streams of two views of the left eye and the right eye for the three-dimensional image display are included in one video elementary stream. In the example, the video elementary stream is configured with AVC stream transmitted in "Stream_Type=0x1b" of PMT.

Fig. 2(b) shows an example in which respective video streams of two views of the left eye and the right eye for the three-dimensional image display are included in separate video elementary streams. In the example, the video elementary streams are configured with a stream of a base view of MVC transmitted in "Stream_Type=0x1b" of PMT, and a stream of a Non base view of MVC transmitted in "Stream_Type=0x20" of PMT.

Fig. 2(c) shows an example in which respective video streams of two views of the left eye and the right eye for the three-dimensional image display are included in separate elementary video streams. In the example, the video elementary streams are configured with an MPEG2 video stream transmitted in "Stream_Type=0x02" of PMT, and AVC stream transmitted in "Stream_Type=0x1b" of PMT.

### Configuration example of transmission data generation unit

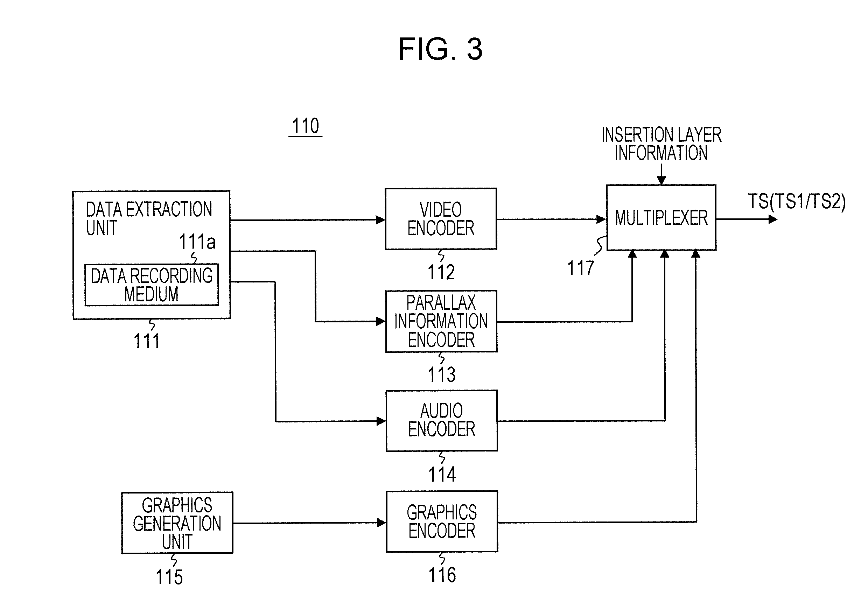

Fig. 3 shows a configuration example of a transmission data generation unit 110 which generates the above described transport stream TS, in the broadcast station 100. The transmission data generation unit 110 includes a data extraction unit (archive unit) 111, a video encoder 112, a parallax information encoder 113, and an audio encoder 114. Further, the transmission data generation unit 110 includes a graphics generation unit 115, a graphics encoder 116, and a multiplexer 117.

A data recording medium 111a, for example, is mounted detachably on the data extraction unit 111. A video stream (image data) of a predetermined event (program) transmitted on the transport stream TS and voice data corresponding to the video stream (image data) are recorded in the data recording medium 111a.

For example, the video stream is switched into a video stream of a single view for a two-dimensional image display or video streams of two views of the left eye and the right eye for a three-dimensional image display, according to the event (program). Further, for example, the image data is switched into the video streams of two views of the left eye and the right eye for the three-dimensional image display or the video stream of a single view for the two-dimensional image display, according to contents such as a main part or a commercial part, even in the event (program).

When the video stream is the video streams of two views of the left eye and the right eye (image data), parallax information is also recorded in association with the video stream in the data recording medium 111a. The parallax information is a parallax vector indicating a parallax between a left view (left image) and a right view (right image), depth data, or the like. The depth data is allowed to be handled as the parallax vector by a predetermined transform.

The parallax information is, for example, parallax information of each divided area obtained by dividing the view (image) by a predetermined number. The parallax information is used to impart the parallax by adjusting the position of the same superimposed information (graphics information, and the like) to be superimposed respectively on the left view and the right view at the reception side. The data recording medium 111a is a disk-shaped recording medium, a semiconductor memory, or the like. The data extraction unit 111 extracts from the data recording medium 111a, a video stream (image data), voice data, parallax information, and the like so as to be output.

The video encoder 112 performs an encoding such as, for example, MPEG4-AVC (MVC) and MPEG2 video on the video stream which is output from the data extraction unit 111 to obtain the encoded video data. Further, when the video stream is a video stream of a single view for a two-dimensional image display, the video encoder 112 generates a video elementary stream including the video stream as a substream, by a stream formatter (not shown) provided in a rear stage.

Further, when the video stream is video streams of two views of the left eye and the right eye for a three-dimensional image display, the video encoder 112 generates a video elementary stream including the video streams as substreams, by a stream formatter (not shown) provided in a rear stage. Here, the video streams of two views of the left eye and the right eye for the three-dimensional image display are included in one video elementary stream (see Fig. 2(a)), or are respectively included in separate video elementary streams (see Figs. 2(b) and (c)).

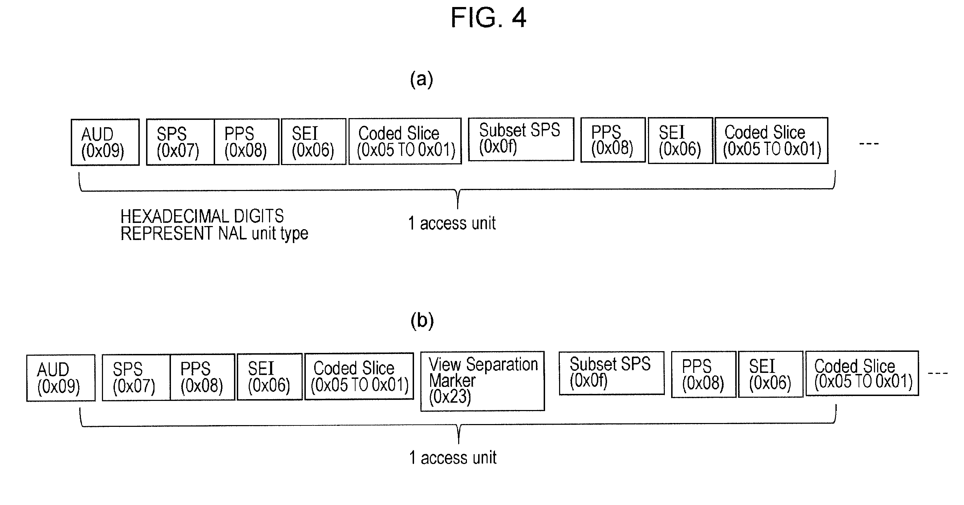

Here, a case in which the video streams of two views of the left eye and the right eye are included in one video elementary stream will be described. Figs. 4(a) and (b) show the example in which data (SPS to Coded Slice) of one view is placed in the first half of each access unit and data (Subset SPS to Coded Slice) of the other view is placed in the second half of each access unit. In addition, the example is an example of an encoding of MPEG4-AVC, and hexadecimal digits in the drawings represent "NAL unit type".

When the video streams of two views of the left eye and the right eye coexist in one video elementary stream, the boundary of pictures of respective views is required to be identifiable. Access unit delimiter (AUD) is allowed to be assigned only at the beginning of one access unit.

Thus, as shown in Fig. 4(b), it is considered that a new NAL unit indicating a boundary between views, termed "View Separation Marker", is defined and disposed between data of two views. Thus, it is possible to instantly access the beginning data of the picture of each view. In addition, Fig. 4(a) shows an example in which "View Separation Marker" is not disposed between the data of two views.

The parallax information encoder 113 generates a parallax information elementary stream including parallax information which is output from the data extraction unit 111. The audio encoder 114 performs encoding such as MPEG-2 Audio and AAC on the voice data which is output from the data extraction unit 111 to generate an audio elementary stream.

The graphics generation unit 115 generates data (graphics data) of graphics information (including subtitle information) to be superimposed on the image. The graphics encoder 116 generates a graphics elementary stream including graphics data which is generated in the graphics generation unit 115. Here, the graphics information forms superimposed information, and, for example, a logo or the like. For example, the subtitle information is a subtitle.

The graphics data is bit map data. In the graphics data, idling offset information showing the superimposed position on the image is added. The idling offset information indicates an offset value in a vertical direction and a horizontal direction, for example, from the origin at the upper left of the image to a pixel at the upper left of the superimposed position of the graphics information. In addition, a standard for transmitting the subtitle data as bitmap data is standardized and applied, for example, as "DVB_Subtitling" in DVB which is a digital broadcasting standard in Europe.

The multiplexer 117 packetizes and multiplexes respective elementary streams which are generated by the video encoder 112, the parallax information encoder 113, the audio encoder 114 and the graphics encoder 116 so as to be generated as the transport stream TS.

The transport stream TS is intended to have the following video elementary stream in a period of a predetermined event in which the video stream of the single view for the two-dimensional image display is extracted from the data extraction unit 111 or in a predetermined period during the event. In other words, in the period, the transport stream TS is intended to have one video elementary stream in which the video stream is included as a substream.

Further, in a period of a predetermined event in which the video streams of two views of the left eye and the right eye for the three-dimensional image display are extracted from the data extraction unit 111, or in a predetermined period during the event, the transport stream TS is intended to have the following video elementary stream. In other words, in the period, the transport stream TS is intended to have one video elementary stream including both the video streams as a substream, or to have two video elementary streams respectively including video streams as the substreams.

The multiplexer 117 inserts the configuration information described above in the transport stream TS. The configuration information is selectively inserted in a single or a plurality of layers of the transport stream TS, for example, based on the insertion layer information depending on the selection operation of a user. For example, a layer of a transport stream, a layer of a video stream (substream), and the like are present as the option of the insertion layer.

The configuration information is inserted under the Video Elementary Loop (Video ES loop) of PMT or under EIT in the layer of the transport stream. Further, the configuration information is inserted in the user data area or the like of the picture header or the sequence header in the layer (the picture layer and the sequence layer) in the video stream. The detailed description of the insertion of the configuration information in the multiplexer 117 will be described later.

The operation of the transmission data generation unit 110 shown in Fig. 3 will be described briefly. A data stream which is output from the data extraction unit 111 is supplied to the video encoder 112. In this case, the data stream is the data streams of two views of the left eye and the right eye for the three-dimensional image display or the data stream of the single view for the two-dimensional image display.

The video encoder 112 performs an encoding such as, for example, MPEG4-AVC (MVC) and MPEG2 video on the data stream, and generates a video elementary stream including encoded video data so as to be supplied to the multiplexer 117. Here, when the video stream of the single view for the two-dimensional image display is supplied, one video elementary stream including the video stream as the substream is generated.

In contrast, when the video streams of two views of the left eye and the right eye for the three-dimensional image display are supplied, the following video elementary stream is generated. In other words, one video elementary stream including both video streams of two views, or two video elementary streams respectively including video streams of two views are generated.

Further, when the video streams of two views of the left eye and the right eye for the three-dimensional image display are output from the data extraction unit 111, the parallax information corresponding to the video stream is also output from the data extraction unit 111. The parallax information is supplied to the parallax information encoder 113. The parallax information encoder 113 performs a predetermined encoding on the parallax information to generate a parallax information elementary stream including encoded data. The parallax information elementary stream is supplied to the multiplexer 117.

Further, when the video stream is output from the data extraction unit 111, voice data corresponding to the video stream is also output from the data extraction unit 111. The voice data is supplied to the audio encoder 114. The audio encoder 114 performs an encoding such as MPEG-2 or MPEG-4 Audio AAC on the voice data to generate an audio elementary stream including encoded audio data. The audio elementary stream is supplied to the multiplexer 117.

Further, the graphics generation unit 115 generates data (graphics data) of graphics information (including subtitle information) superimposed on an image (view) corresponding to the video stream which is output from the data extraction unit 111. The graphics data is supplied to the graphics encoder 116. The graphics encoder 116 performs a predetermined encoding on the graphics data to generate a graphics elementary stream including encoded data. The graphics elementary stream is supplied to the multiplexer 117.

The multiplexer 117 packetizes and multiplexes the elementary streams supplied from each encoder to generate a transport stream TS. Further, the multiplexer 117 inserts the configuration information of the video stream of each view included in the transport stream TS, in the transport stream TS.

### [Configuration Information and Insertion Thereof]

As described above, the multiplexer 117 inserts the configuration information in the transport stream TS. The configuration information is selectively inserted in a single or a plurality of layers of the transport stream TS, for example, a layer of a transport stream, a layer of a video stream, and the like, based on the insertion layer information depending on the selection operation of the user.

When the configuration information is inserted in the layer of the transport stream, a substream configuration descriptor (Substream_configuration_descriptor) including the configuration information is inserted, for example, under the Video Elementary Loop (Video ES loop) of the PMT or under EIT. Further, the configuration information is inserted in the layer of the video stream, substream configuration data (Substream_configuration_data()) including the configuration information is inserted, for example, in the user data area.

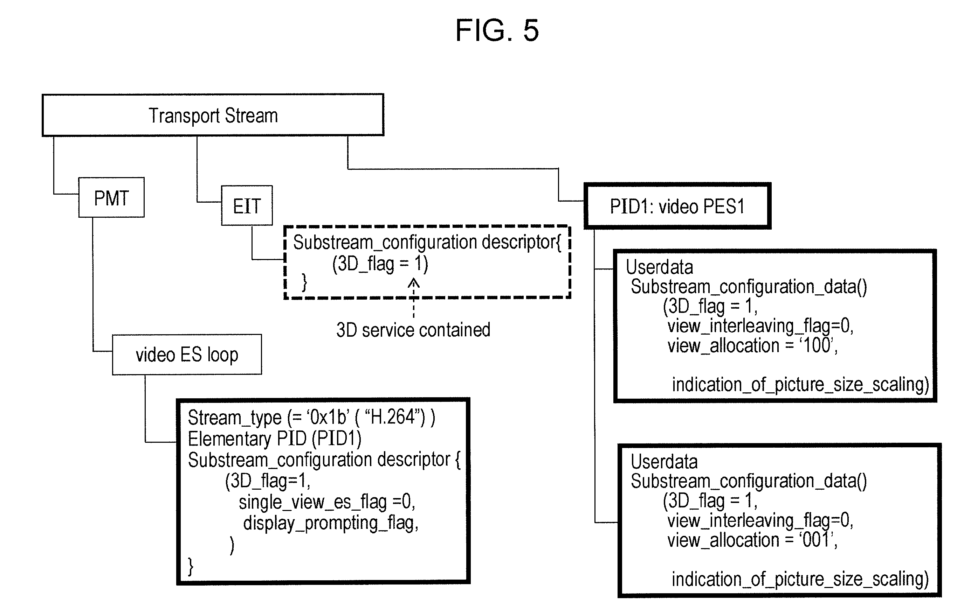

Fig. 5 shows a configuration example of a transport stream TS. In addition, in the configuration example, for simplicity of illustration, parallax information, audio, and graphics are omitted from the illustration. The configuration example shows an example in which the video streams of two views of the left eye and the right eye for the three-dimensional image display are included in one video elementary stream as a substream. The video elementary stream is an AVC stream transmitted in "Stream_Type=0x1b" (see Fig. 2(a)). The configuration example includes a PES packet "Video PES1" of a video elementary stream. The PES packet includes data of two views of the left eye and the right eye.

Further, the transport stream TS includes a Program Map Table (PMT) as Program Specific Information (PSI). The PSI is information describing a program to which each elementary stream included in the transport stream belongs. Further, the transport stream includes an Event Information Table (EIT) as Serviced Information (SI) for performing management in a unit of an event.

An elementary loop having information associated with each elementary stream is present in the PMT. A Video Elementary Loop (Video ES loop) is present in the configuration example. Information such as a packet identifier (PID) and a stream type (Stream_Type) as well as a descriptor that describes information associated with the elementary stream are placed at each stream in the elementary loop.

In the configuration example, substream configuration data (Substream_configuration_data()) is inserted corresponding to the video stream of each view in the user data (user_data) area of the video elementary stream. Further, in the configuration example, a substream configuration descriptor (Substream_configuration_descriptor) is inserted in the Video Elementary Loop (Video ES loop) of PMT. In addition, it is also considered that the substream configuration descriptor is inserted under EIT.

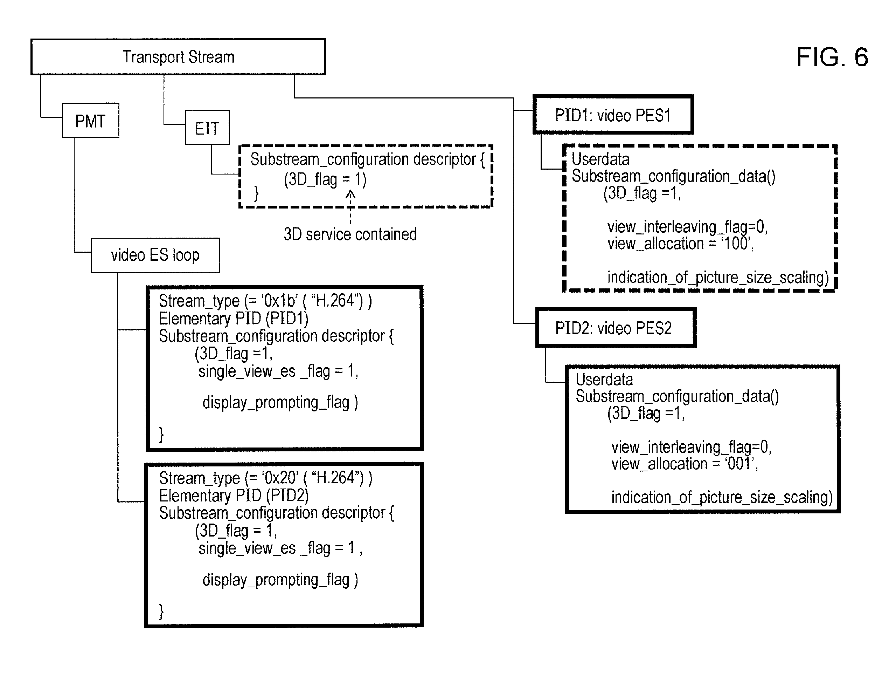

Fig. 6 also shows the configuration example of the transport stream TS. In addition, in the configuration example, for simplicity of illustration, parallax information, audio, and graphics are omitted from the illustration. The configuration example shows an example in which the video streams of two views of the left eye and the right eye for the three-dimensional image display are respectively included in separate video elementary streams. Two video elementary streams are a stream of a base view of MVC that is transmitted in "Stream_Type=0x1b" and a stream of a Non base view of MVC that is transmitted in "Stream_Type=0x20" (see Fig. 2(b)). The configuration example includes a PES packet "Video PES1" and a PES packet "Video PES2" of a video elementary stream, and each PES packet includes data of two views of the left eye and the right eye.

Further, the transport stream TS includes a Program Map Table (PMT) as Program Specific Information (PSI). The PSI is information describing a program to which each elementary stream included in the transport stream belongs. Further, the transport stream includes an Event Information Table (EIT) as Serviced Information (SI) for performing management in a unit of an event.

An elementary loop having information associated with each elementary stream is present in the PMT. A Video Elementary Loop (Video ES loop) is present in the configuration example. Information such as a packet identifier (PID) and a stream type (Stream_Type) as well as a descriptor that describes information associated with the elementary stream are placed at each stream in the elementary stream.

In the configuration example, substream configuration data (Substream_configuration_data()) is inserted in the user data (user_data) area of each video elementary stream. Further, in the configuration example, a substream configuration descriptor (Substream_configuration_descriptor) is inserted in the Video Elementary Loop (Video ES loop) of PMT at each stream. In addition, it is also considered that the substream configuration descriptor is inserted under EIT.

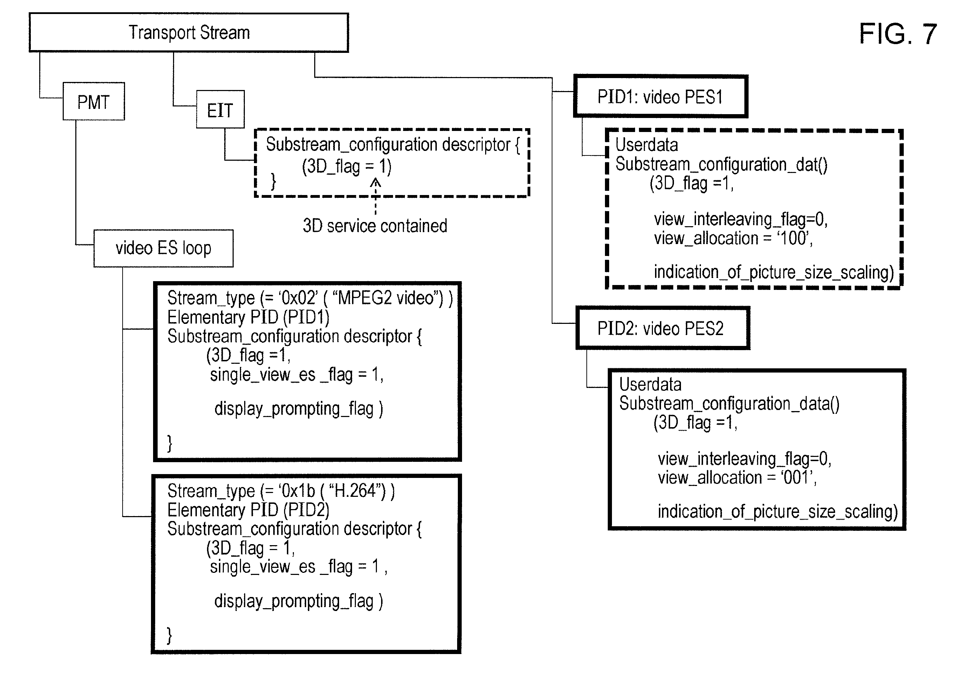

Fig. 7 also shows the configuration example of the transport stream TS. In addition, in the configuration example, for simplicity of illustration, parallax information, audio, and graphics are omitted from the illustration. The configuration example shows an example in which the video streams of two views of the left eye and the right eye for the three-dimensional image display are respectively included in separate video elementary streams. Two video elementary streams are a MPEG2 video stream that is transmitted in "Stream_Type=0x02" and an AVC stream that is transmitted in "Stream_Type=0x1b" (see Fig. 2(c)). The configuration example includes a PES packet "Video PES1" and a PES packet "Video PES2" of a video elementary stream, and each PES packet includes data of two views of the left eye and the right eye.

Further, the transport stream TS includes a Program Map Table (PMT) as Program Specific Information (PSI). The PSI is information describing a program to which each elementary stream included in the transport stream belongs. Further, the transport stream includes an Event Information Table (EIT) as Serviced Information (SI) for performing management in a unit of an event.

An elementary loop having information associated with each elementary stream is present in the PMT. A Video Elementary Loop (Video ES loop) is present in the configuration example. Information such as a packet identifier (PID) and a stream type (Stream_Type) as well as a descriptor that describes information associated with the elementary stream are placed at each stream in the elementary stream.

In the configuration example, substream configuration data (Substream_configuration_data()) is inserted in the user data (user_data) area of each video elementary stream. Further, in the configuration example, a substream configuration descriptor (Substream_configuration_descriptor) is inserted in the Video Elementary Loop (Video ES loop) of PMT at each stream. In addition, it is also considered that the substream configuration descriptor is inserted under EIT.

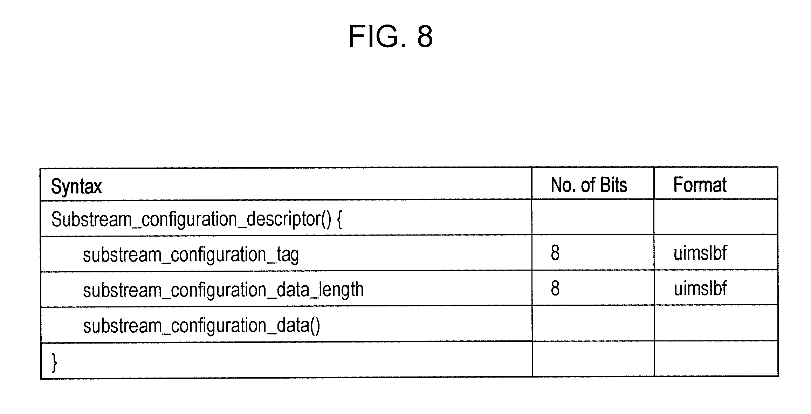

Fig. 8 shows a structural example (Syntax) of the substream configuration descriptor. "substream_configuration_tag" is data of eight bits indicating a descriptor type, and, herein, indicates that the descriptor type is a substream configuration descriptor. "substream_configuration_data_length" is data of eight bits indicating a length (size) of a descriptor. The data indicates the number of bytes of "substream_configuration_data()" to be described later.

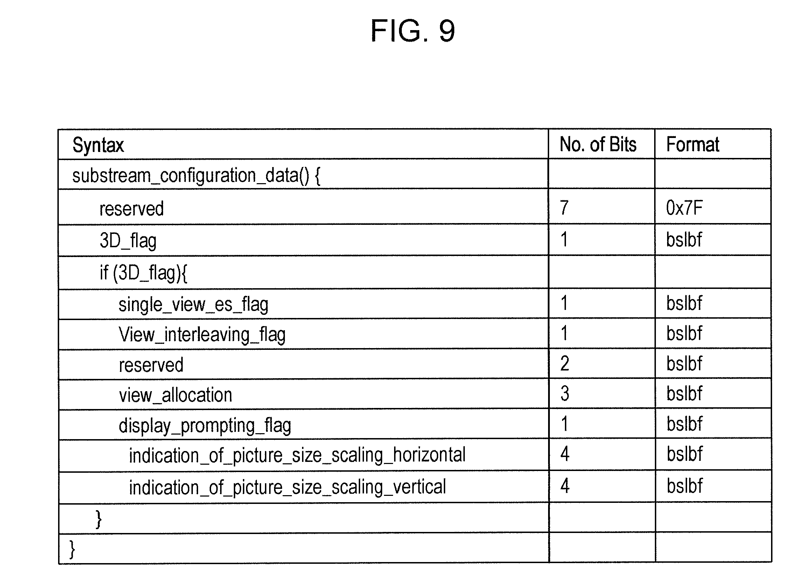

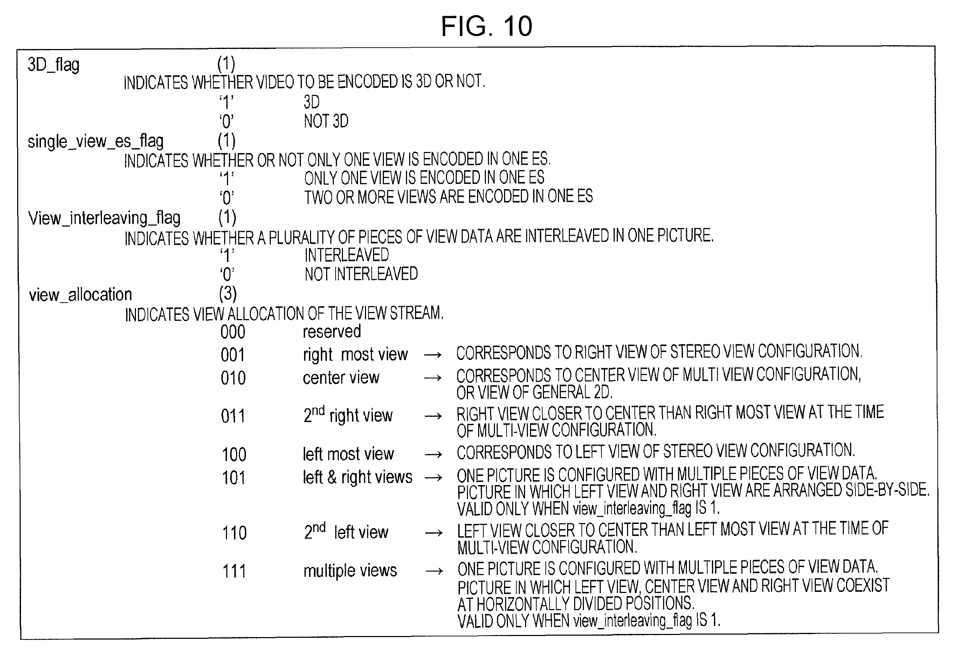

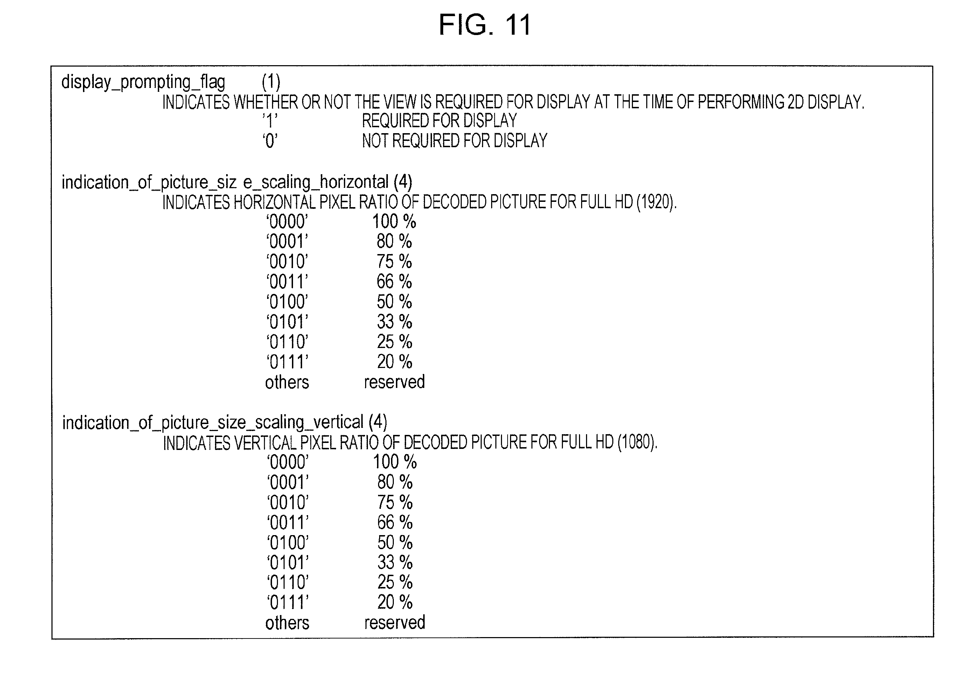

Fig. 9 shows a structural example (Syntax) of "substream_configuration_data()". Figs. 10 and 11 show the contents (Semantics) of each piece of information in the structural example shown in Fig. 9. One-bit field of "3D_flag" indicates whether the video to be encoded is 3D or not. "1" indicates that the video to be encoded is 3D, that is, video streams having two views of the left eye and the right eye for the three-dimensional (3D) image display are included in a transport stream TS. In contrast, "0" indicates that the video to be encoded is not 3D, but is 2D, that is, a video stream of a single view for the two-dimensional (2D) image display is included in a transport stream TS.

Further, the following information is present when it is established that "3D_flag=1". One-bit field of "single_view_es_flag" indicates whether or not only one view is encoded in one video elementary stream. In other words, the one-bit field of the "single_view_es_flag" indicates whether or not video streams (substreams) of a plurality of views are inserted in one video elementary stream. "1" indicates that only one view is encoded in one video elementary stream. In contrast, "0" indicates that two or more views are encoded in one video elementary stream.

One-bit field of "View_interleaving_flag" indicates whether or not data of a video stream of a plurality of views are interleaved in one picture. "1" indicates that the data is interleaved. In contrast, "0" indicates that the data is not interleaved.

Three-bit field of "view_allocation" indicates the view allocation of a video stream of the view. "001" indicates that the view corresponds to a right view of a stereo view configuration. "010" indicates that the view corresponds to a center view of a multi-view configuration, or a view of 2D. "011" indicates a right view closer to the center than "right most view" "001" at the time of a multi-view configuration.

"100" indicates that the view corresponds to a left view of a stereo view configuration. "101" indicates that one picture is configured with multiple pieces of view data, and indicates a picture in which a left view and a right view are arranged Side-by-Side. This is valid only when it is established that "View_interleaving_flag=1".

"110" indicates a left view closer to the center than "left most view" "100" at the time of a multi-view configuration. "111" indicates that one picture is configured with multiple pieces of view data and indicates a picture in which a left view, a center view and a right view coexist at horizontally divided positions. This is valid only when it is established that "View_interleaving_flag=1".

One-bit field of "display_prompting_flag" indicates whether or not the view is required for a display at the time of performing a 2D display. "1" indicates that the view is required for a display. In contrast, "0" indicates that the view is not required for a display.

Four-bit field of "indication_of_picture_size_scaling _horizontal" indicates a horizontal pixel ratio of a decoded picture for a full HD (1920). "0000", "0001", "0010", "0011", "0100", "0101", "0110", and "0111" respectively indicate 100%, 80%, 75%, 66%, 50%, 33%, 25%, and 20%.

Four-bit field of "indication_of_picture_size_scaling _vertical" indicates a vertical pixel ratio of a decoded picture for a full HD (1080). "0000", "0001", "0010", "0011", "0100", "0101", "0110", and "0111" respectively indicate 100%, 80%, 75%, 66%, 50%, 33%, 25%, and 20%.

In addition, a ratio at which the decoded picture is finally displayed depends on reproduction equipment. For example, in the case of a television receiver (TV), it is considered that L/R are frequently scaled to be 100% in a subsequent stage. Further, for example, in the case of a set top box (STB), when the decoded picture is transmitted to the television receiver (TV) in a digital interface such as HDMI, L/R are scaled to 50% in the horizontal direction so as to be transmitted as a picture of Side-by-Side.

Next, a case in which the substream configuration data (Substream_configuration_data()) is inserted in the user data area of the video elementary stream will be described. In this case, the substream configuration data is inserted, for example, in a unit of a picture or in a unit of a GOP, using the user data area.

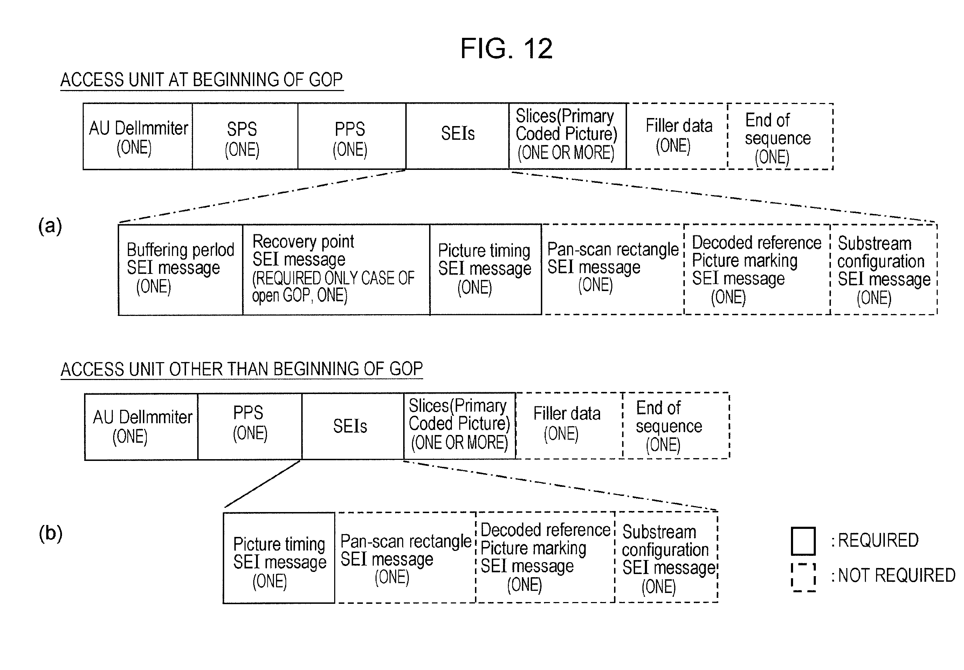

For example, when the encoding method is AVC, the substream configuration data is inserted in the part of "SEIS" of an access unit as "substream configuration SEI message". Fig. 12(a) shows an access unit of the beginning part of Group Of Pictures (GOP), Fig. 12(b) shows an access unit other than the beginning part of GOP. When the substream configuration data is inserted in a unit of a GOP, "substream configuration SEI message" is inserted only in the access unit of the beginning part of GOP.

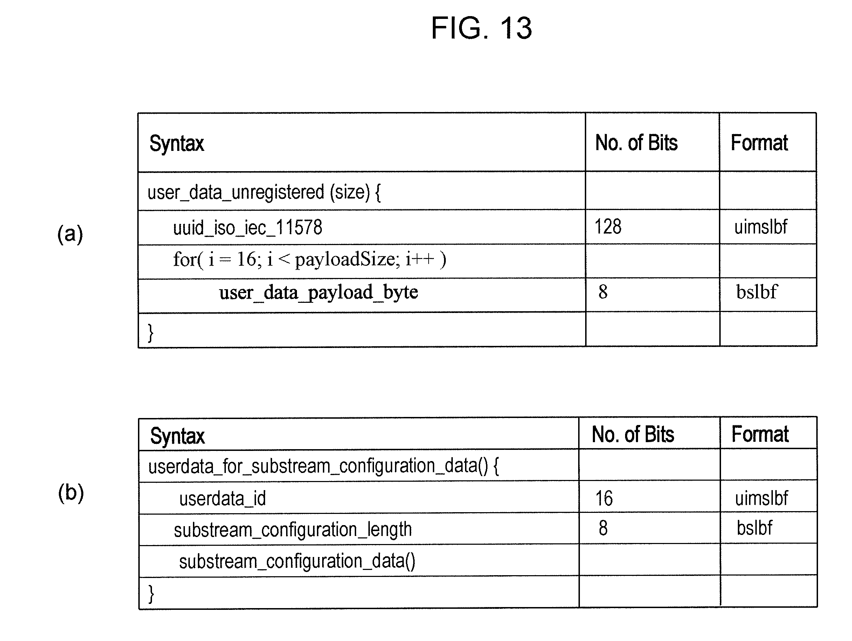

Fig. 13(a) shows a structural example (Syntax) of "substream configuration SEI message". "uuid_iso_iec_11578" has a UUID value indicated by "ISO/IEC 11578: 1996 AnnexA. "userdata_for_substream_configuration_data()" is inserted in the field of "user_data_payload_byte". Fig. 13(b) shows a structural example (Syntax) of "userdata_for_substream_configuration_data()", and substream configuration data (Substream_configuration_data()) is inserted therein (refer to Fig. 9). "stream_association_id" is an identifier of the substream configuration data, which is indicated by unsigned 16 bits.

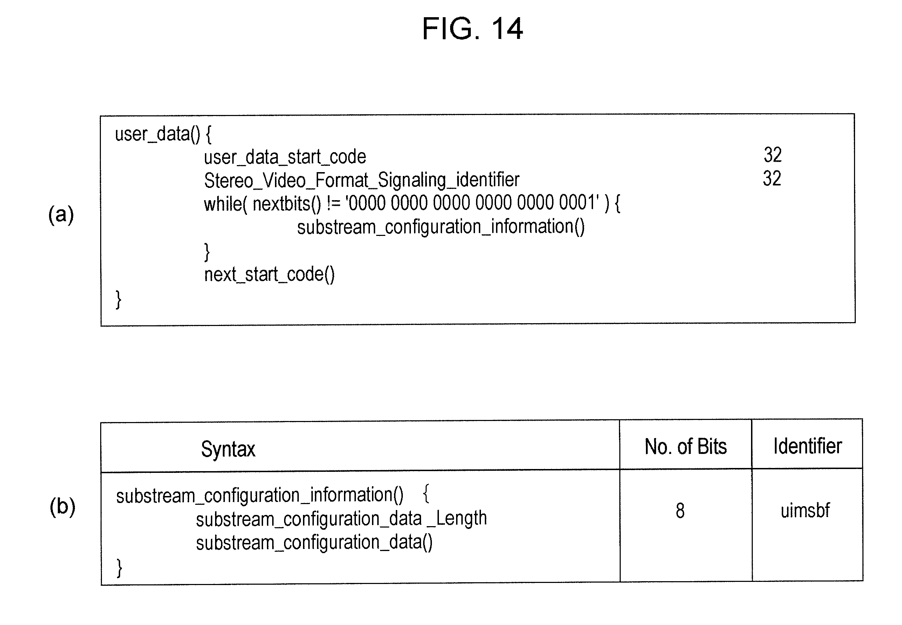

Further, for example, when an encoding method is a MPEG2 video, the substream configuration data is inserted as the user data "user_data()", in the user data area of the picture header part. Fig. 14(a) shows a structural example (Syntax) of "user_data()". 32-bit field of "user_data_start_code" is a start code of the user data (user_data) and has a fixed value of "0x000001B2".

32-bit field following the start code is an identifier for identifying the contents of the user data. Here, the identifier is "Stereo_Video_Format_Signaling_identifier" indicating that the user data is the substream configuration data. As a data main body after the identifier, "substream_configuration_information()" as stream-associated information is inserted. Fig. 14(b) shows a structural example (Syntax) of "substream_configuration_information()", and the substream configuration data (Substream_configuration_data()) is inserted therein (see Fig. 9).

As described above, in the transmission data generation unit 110 shown in Fig. 2, the multiplexer 117 can insert the configuration information (Substream_configuration_data()) of the video stream of each view included in the transport stream TS, in the transport stream TS. Accordingly, the reception side is able to perform a proper and efficient process based on the configuration information.

Further, the transmission data generation unit 110 in Fig. 2 can selectively insert the substream configuration data (Substream_configuration_data()) as the configuration information in a single or a plurality of layers of a layer of a transport stream and a layer of a video stream. Accordingly, the configuration information can be inserted in the layer required according to the service, and thus it is possible to achieve the convenience of a process at the reception side.

For example, the substream configuration descriptor including the substream configuration data is placed at a suitable position in a static or dynamic use sequence in a unit of an event or in time. In addition, the substream configuration data is placed at a suitable position in the video elementary stream by using the user data area, or the like as a signaling at the time of dynamic switching in a unit of a picture or a unit of a scene (corresponding to random access).

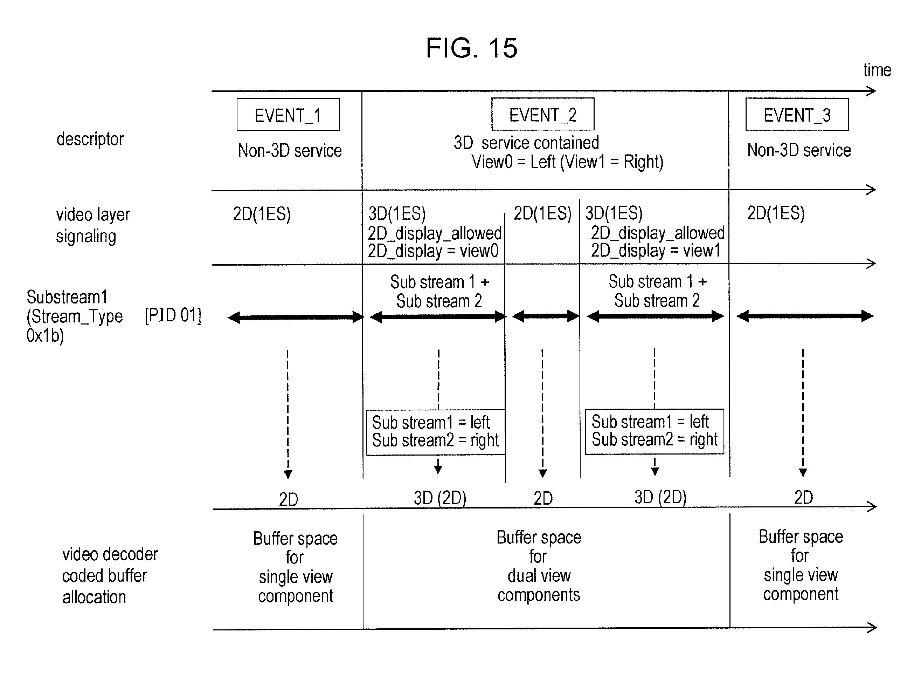

Fig. 15 shows a temporal modification example of information included in a substream configuration descriptor inserted in a layer of a transport stream or substream configuration data inserted in a layer of a video stream. The example shows an example in which the video streams of two views of the left eye and the right eye for the three-dimensional image display are included in one video elementary stream (see Fig. 2(a) and Fig. 5). In the example, one video elementary stream is an AVC stream transmitted in "Stream_Type=0x1b".

The example shows an example in which video streams (image data) of an event 1 "EVENT_1", an event 2 "EVENT_2", and an event 3 "EVENT_3" are transmitted in this order. The entire event 1 "EVENT_1" is the event of a 2D service. In the service period of the event 1 "EVENT_1", one video elementary stream including the video stream of a single view for the two-dimensional image display is transmitted in the transport stream TS.

The event 2 "EVENT_2" is an event including a 3D service. In the 2D service period of the event 2 "EVENT_2", one video elementary stream including the video stream of a single view for the two-dimensional image display is transmitted in the transport stream TS. Further, in the 3D service period of the event 2 "EVENT_2", one video elementary stream including the video streams of two views of the left eye and the right eye for the three-dimensional image display is transmitted in the transport stream TS.

Similar to the event 1 "EVENT_1", the entire event 3 "EVENT_3" is the event of a 2D service. In a service period of the event 3 "EVENT_3", one video elementary stream including the video stream of a single view for the two-dimensional image display is transmitted in the transport stream TS.

In the example, the substream configuration descriptor is inserted under EIT, and the contents of the configuration information are changed in a unit of an event. For example, in the event 1 "EVENT_1" and the event 3 "EVENT_3", "3D_flag=0", so that it is indicated that these events are all 2D services, without including a 3D service. Further, in the event 2 "EVENT_2", "3D_flag=1", so that it is indicated that the event includes a 3D service. The reception side can perform an appropriate control to secure, for example, the decoded buffer area which is required in a unit of an event, by information of the "3D_flag".

Further, substream configuration data corresponding to a video stream of each view is inserted in the user data area of the video elementary stream, and the contents of the configuration information are changed in a unit of a picture or a unit of a GOP. For example, in the event 1 "EVENT_1" and the event 3 "EVENT_3", "3D_flag=0", so that it is indicated that these events are all 2D services.

Further, in the event 2 "EVENT_2", in the 3D service period, "3D_flag=1" and in the 2D service period, "3D_flag=0", so that it is indicated whether these events are a 3D service or a 2D service in a unit of a picture or in a unit of a GOP. The reception side can perform an appropriate switching control of a reception process by information of "3D_flag".

Further, at this time, the reception side can know that a 2D display is possible in the 3D service period and can know which view should be displayed if it is possible, by information of "display_prompting_flag", thereby performing an appropriate control of the 2D display.

Further, in this example, for example, in the first 3D service period of the event 2 "EVENT_2", "2D_display_allowed", that is, 2D display is possible, and "2D_display=view0", that is, a left view (View0) in the 2D display is displayed. In the 3D service period, "display_prompting_flag" described above is set to "1" for the left view (View0) and is set to "0" for the right view (View1).

Further, in this example, for example, in the second 3D service period of the event 2 "EVENT_2", "2D_display_allowed", that is, 2D display is possible, and "2D_display=view1", that is, a right view (View0) in the 2D display is displayed. In the 3D service period, "display_prompting_flag" described above is set to "1" for the right view (View1) and is set to "0" for the left view (View0).

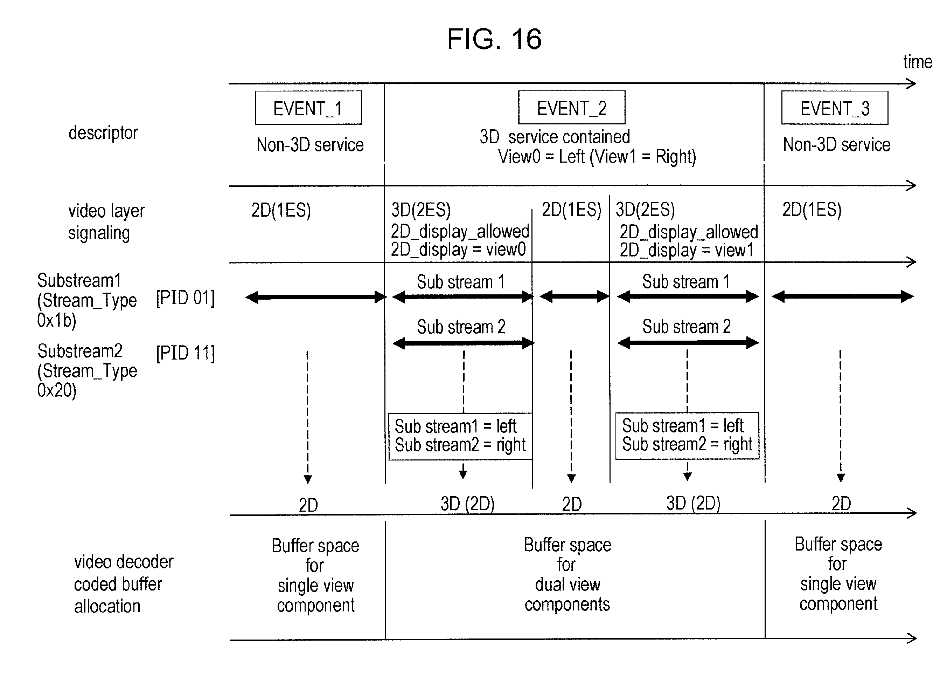

Fig. 16 also shows a temporal modification example of information included in a substream configuration descriptor inserted in a layer of a transport stream, or substream configuration data inserted in a layer of a video stream. The example shows an example in which the video streams of two views of the left eye and the right eye for the three-dimensional image display are respectively included in separate video elementary streams (see Fig. 2(b) and Fig. 6). In the example, two video elementary streams are a stream of a base view of MVC transmitted in "Stream_Type=0x1b", and a stream of a Non base view of MVC transmitted in "Stream_Type=0x20" of PMT.

The example shows an example in which video streams (image data) of an event 1 "EVENT_1", an event 2 "EVENT_2", and an event 3 "EVENT_3" are transmitted in this order. The entire event 1 "EVENT_1" is the event of a 2D service. In the service period of the event 1 "EVENT_1", one video elementary stream including the video stream of a single view for the two-dimensional image display is transmitted in the transport stream TS.

The event 2 "EVENT_2" is an event including a 3D service. During a 2D service period of the event 2 "EVENT_2", one video elementary stream including the video stream of a single view for the two-dimensional image display is transmitted in the transport stream TS. Further, during a 3D service period of the event 2 "EVENT_2", separate video elementary streams respectively including the video streams of two views of the left eye and the right eye for the three-dimensional image display are transmitted in the transport stream TS.

Similar to the event 1 "EVENT_1", the entire event 3 "EVENT_3" is the event of a 2D service. In a service period of the event 3 "EVENT_3", one video elementary stream including the video stream of a single view for the two-dimensional image display is transmitted in the transport stream TS.

In the example, the substream configuration descriptor is inserted under EIT, and the contents of the configuration information are changed in a unit of an event. For example, in the event 1 "EVENT_1" and the event 3 "EVENT_3", "3D_flag=0", so that it is indicated that these events are all 2D services, without including a 3D service. Further, in the event 2 "EVENT_2", "3D_flag=1", so that it is indicated that the event includes a 3D service. The reception side can perform an appropriate control to secure, for example, a decoded buffer area which is required, in a unit of "3D_flag".

Further, substream configuration data corresponding to a video stream of each view is inserted in the user data area of each video elementary stream, and the contents of the configuration information are changed in a unit of a picture or a unit of a GOP. For example, in the event 1 "EVENT_1" and the event 3 "EVENT_3", "3D_flag=0", so that it is indicated that these events are all 2D services.

Further, in the event 2 "EVENT_2", in the 3D service period, "3D_flag=1" and in the 2D service period, "3D_flag=0", so that it is indicated whether the event is a 3D service or a 2D service in a unit of a picture or in a unit of a GOP. The reception side can perform an appropriate switching control of a reception process by information of "3D_flag".

Further, at this time, the reception side can know that the 2D display is possible in the 3D service period and which view should be displayed if it is possible, by information of "display_prompting_flag", thereby performing an appropriate control of the 2D display. In the example, similar to the example of Fig. 15, it is indicated that "2D_display_allowed" in the 3D service period, in other words, 2D display is possible.

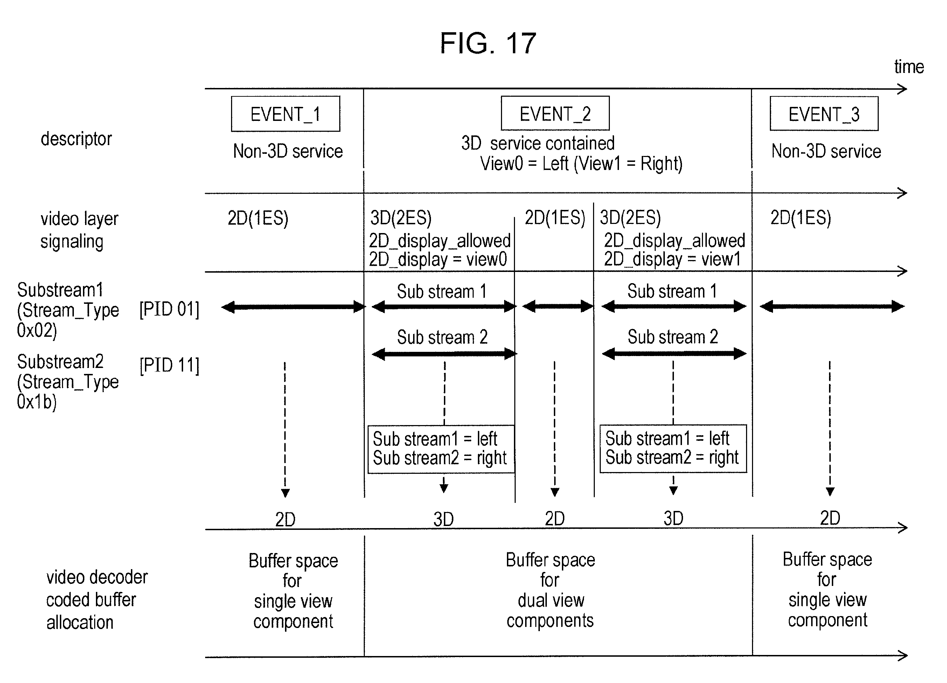

Fig. 17 also shows a temporal modification example of information included in a substream configuration descriptor inserted in a layer of a transport stream or substream configuration data inserted in a layer of a video stream. The example shows an example in which the video streams of two views of the left eye and the right eye for the three-dimensional image display are respectively included in separate video elementary streams (see Fig. 2(c) and Fig. 7). In the example, two video elementary streams are a stream of a MPEG2 video stream transmitted in "Stream_Type=0x02", and an AVC stream transmitted in "Stream_Type=0x1b" of PMT. Although the description is omitted, others are the same as in the example of Fig. 16.

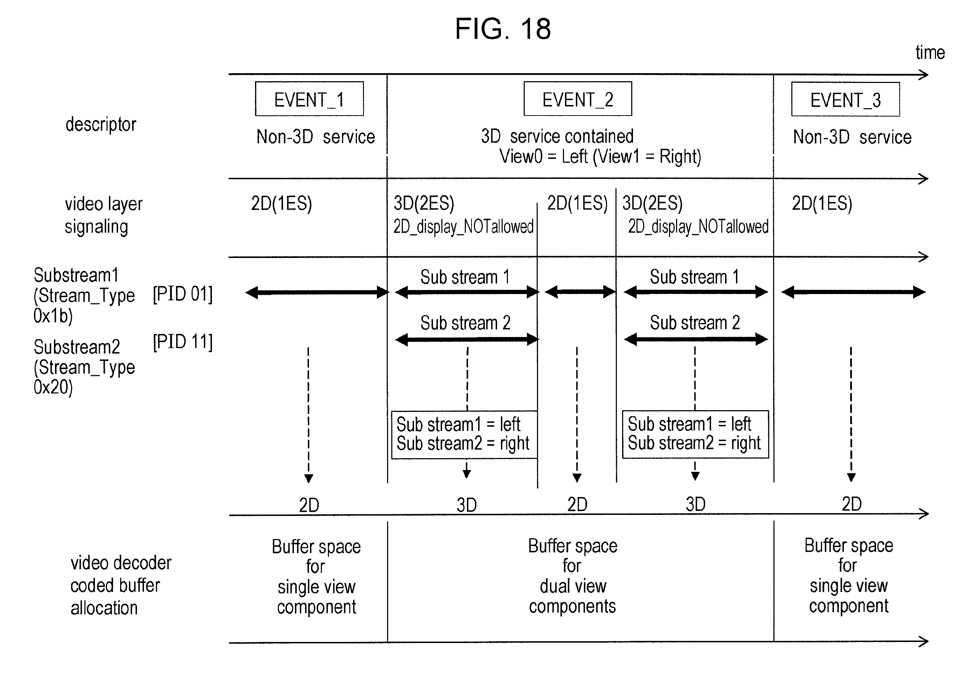

Fig. 18 also shows a temporal modification example of information included in a substream configuration descriptor inserted in a layer of a transport stream or substream configuration data inserted in a layer of a video stream. The example shows an example in which the video streams of two views of the left eye and the right eye for the three-dimensional image display are respectively included in separate video elementary streams (see Fig. 2(b) and Fig. 6).

Even in the example, similar to each example described above, the reception side can perform an appropriate control to switch a reception process by information of "3D_flag". Further, at this time, the reception side can know that the 2D display is possible in the 3D service period and which view should be displayed if it is possible, by information of "display_prompting_flag", thereby performing an appropriate control of the 2D display.

In the example, for example, in each 3D service period of the event 2 "EVENT_2", "2D_display_NOTallowed", that is, a 2D display is not allowed and thus is impossible. In the 3D service period, "display_prompting_flag" described above is set to "1" for both the left view (View0) and the right view (View1).

Although not described in detail, the other is the same as in the example of Fig. 16.

### Configuration example of receiver

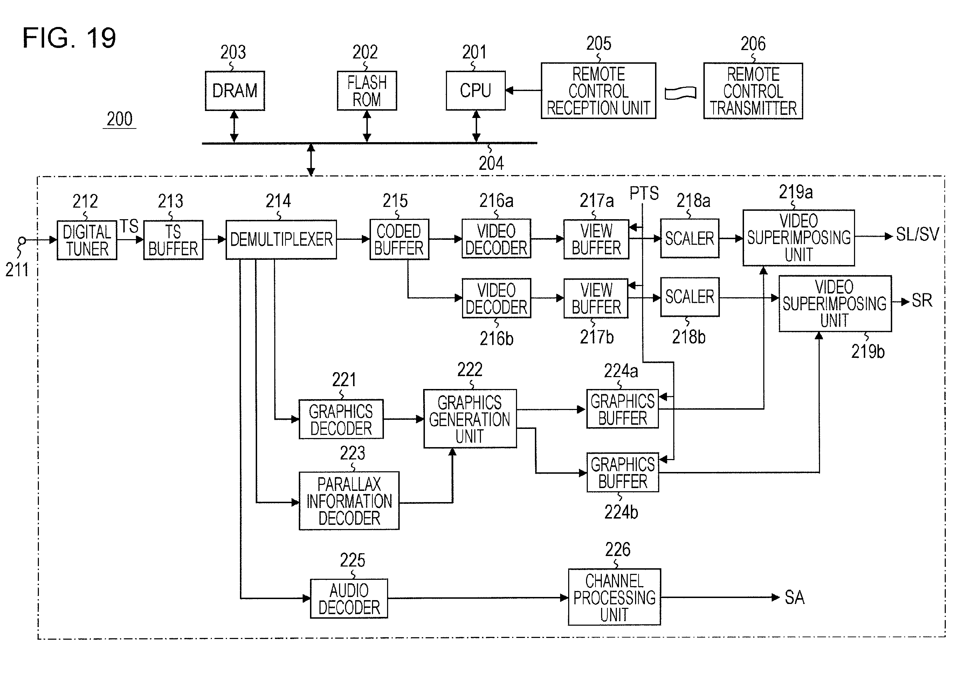

Fig. 19 shows a configuration example of a receiver 200. The receiver 200 includes a CPU 201, a flash ROM 202, a DRAM 203, an internal bus 204, a remote control reception unit 205, and a remote control transmitter 206. Further, the receiver 200 includes an antenna terminal 211, a digital tuner 212, a transport stream buffer (TS buffer) 213, and a demultiplexer 214.

Further, the receiver 200 includes a coded buffer 215, video decoders 216a and 216b, view buffers 217a and 217b, scalers 218a and 218b, and video superimposing units (display buffer) 219a and 219b. Further, the receiver 200 includes a graphics decoder 221, a graphics generation unit 222, a parallax information decoder 223, graphics buffers 224a and 224b, an audio decoder 225, and a channel processing unit 226.

The CPU 201 controls the operation of each unit of the receiver 200. The flash ROM 202 stores control software and data. The DRAM 203 forms a work area of the CPU 201. The CPU 201 develops software and data which are read from the flash ROM 202 onto the DRAM 203 to activate software and to control each unit of the receiver 200. The remote control reception unit 205 receives a remote control signal (remote control code) transmitted from the remote control transmitter 206 so as to be supplied to the CPU 201. The CPU 201 controls each unit of the receiver 200 based on the remote control code. The CPU 201, the flash ROM 202, and the DRAM 203 are connected to the internal bus 204.

The antenna terminal 211 is a terminal which inputs television broadcast signals received in a reception antenna (not shown). The digital tuner 212 processes the television broadcast signals which are input to the antenna terminal 211, and outputs a predetermined transport stream (bit stream data) TS corresponding to the selection channel of the user. The transport stream buffer (TS buffer) 213 temporarily accumulates the transport stream TS which is output from the digital tuner 212.

The transport stream TS includes, as described above, the video stream of a single view for the two-dimensional image display, or the video streams of two views of the left eye and the right eye for the three-dimensional image display. In addition, the video streams of two views of the left eye and the right eye are included in one video elementary stream, or respectively included in separate video streams. As described above, the configuration information of the video stream of each view included in the transport stream TS is inserted in the transport stream TS.

In other words, the configuration information is selectively inserted, in a single or a plurality of layers of the transport stream TS, for example, a layer of a transport stream, a layer of a video stream, or the like, based on the insertion layer information depending on the selection operation of the user. When the configuration information is inserted in the layer of the transport stream, for example, a substream configuration descriptor including the configuration information is inserted under the Video Elementary Loop (Video ES loop) of PMT or under EIT.
Further, when the configuration information is inserted in the layer of the video stream, for example, substream configuration data including the configuration information is inserted in the user data area.

The demultiplexer 214 extracts each elementary stream of video, parallax information, graphics and an audio from the transport stream TS temporarily accumulated in the TS buffer 213. The parallax information elementary stream is extracted only when the video elementary stream included in the transport stream TS includes the video streams of two views of the left eye and the right eye for the three-dimensional image display (image data). One or two video elementary streams which are extracted in the demultiplexer 214 are temporarily accumulated in the coded buffer 215.

The transport stream TS includes the video stream of a single view for the two-dimensional image display and the video streams of a plurality of views for the three-dimensional image display (image data) in a time division manner. The video streams of two views of the left eye and the right eye for the three-dimensional image display are transmitted while being included in one elementary stream, or are transmitted while being included in respective separate elementary streams.

For example, a case is considered in which the video streams of two views of the left eye and the right eye for the three-dimensional image display are transmitted for the main part of an event (program) and the video stream of a single view for the two-dimensional image display is transmitted for a commercial message (CM). In addition, for example, a case is considered in which the video stream of a single view for the two-dimensional image display is transmitted in a certain event (program) and the video streams of two views of the left eye and the right eye for the three-dimensional image display are transmitted in at least a part of a period in other events (programs).

Further, the demultiplexer 214 extracts a substream configuration descriptor which is inserted under a layer of a transport stream TS, for example, under a Video Elementary Loop of PMT, or under EIT so as to be supplied to the CPU 201. As described above, the configuration information (Substream_configuration_data()) (see Fig. 9) of the video stream of each view included in the transport stream TS is inserted in the descriptor.

As described above, one-bit field of "3D_flag" indicating whether the video to be encoded is 3D or not is present in the configuration information. The CPU 201 performs a control to secure a necessary area as an area (decoded buffer area) of the coded buffer 215, in a unit of an event (program), based on, for example, "3D_flag" of the substream configuration descriptor which is inserted under EIT. In other words, in a case where "3D_flag=1" indicating that the event includes a 3D service, a buffer space of 3D is secured. In contrast, in a case of "3D_flag=0" indicating that the entire event is a 2D service, a buffer space for 2D is secured.

The video decoders 216a and 216b perform decoding process of the video elementary stream stored in the coded buffer 215, under the control of the CPU 201 to obtain a video stream (image data) of a predetermined view. Here, the video decoder 216a obtains the video stream of the view for the two-dimensional image display, or the video stream of the left view for the three-dimensional image display. In contrast, the video decoder 216b obtains the video stream of the right view for the three-dimensional image display.

Further, the video decoders 216a and 216b extract the substream configuration data (Substream_configuration_data()) inserted in a unit of a picture or a unit of a GOP, using the layer of the video stream, for example, the user data area so as to be supplied to the CPU 201. As described above, the configuration information (see Fig. 9) of the video stream of each view included in the transport stream TS is inserted in the data.

As described above, one-bit field of "3D_flag" indicating whether the video to be encoded is 3D or not is present in the configuration information. Further, one-bit field of "single_view_es_flag" indicating whether or not only one view is encoded in one video elementary stream is present. Three-bit field of "view_allocation" indicating the view allocation is present in the configuration information. The CPU 201 controls the operation of the video decoders 216a and 216b in a unit of a picture or a unit of a GOP, based on the information.

For example, when data of one view is configured with one elementary stream, the CPU 201 can identify a left view and a right view by three-bit field of "view_allocation" which is described in the descriptor corresponding to each stream or in the user data within the elementary stream (see Fig. 6 and Fig. 7). In addition, for example, when data of two views is configured with one elementary stream, the CPU 201 can identify a left view and a right view by three-bit field of "view_allocation" which is described in the user data within the elementary stream (see Fig. 5).

Thus, in a 2D service period, the video stream of the view for the two-dimensional image display (image data) is obtained by the video decoder 216a. Further, in a 3D service period, the video stream (image data) of the left view for the three-dimensional image display is obtained by the video decoder 216a, and the video stream (image data) of the right view for the three-dimensional image display is obtained by the video decoder 216b.

Further, one-bit field of "display_prompting_flag" indicating whether or not each view is required for a display at the time of performing a 2D display is present in the configuration information. The CPU 201 controls the operations of the video decoders 216a and 216b when the user selects a 2D display mode in a 3D service period, based on the information.

In other words, when a view required for a display is present and a 2D display is possible, the video stream (image data) of the view required for a display (left view or right view) is obtained by the video decoder 216a. In contrast, when a view required for a display is not present and a 2D display is not allowed, the selection of a 2D display mode by the user is invalid, and the video streams (image data) of respective views of the left eye and the right eye are respectively obtained by the video decoders 216a and 216b.

The view buffers 217a and 217b temporarily accumulate the video streams (image data) of respective views obtained by the video decoders 216a and 216b.

The graphics decoder 221 performs the reverse process of the graphics encoder 116 (see Fig. 3) of the transmission data generation unit 110 described above. In other words, the graphics decoder 221 performs a decoding process on the encoded graphics data included in the graphics elementary stream extracted by the demultiplexer 214 to obtain the decoded graphics data (including subtitle data).

The parallax information decoder 223 performs the reverse process of the parallax information encoder 113(see Fig. 3) of the transmission data generation unit 110 described above. In other words, the parallax information decoder 223 performs a decoding process on the encoded parallax information included in the parallax information elementary stream extracted by the demultiplexer 214 to obtain the decoded parallax information. The parallax information is a parallax vector indicating the parallax between the left view (left image) and the right view (right image), depth data, or the like. The depth data becomes to be able to be handled as a parallax vector through a predetermined transform. The parallax information is, for example, parallax information of each division area obtained by dividing a view (image) by a predetermined number.

The graphics generation unit 222 generates data of graphics information which is to be superimposed on the view (image), based on the graphics data obtained by the graphics decoder 221. The graphics generation unit 222 generates data of graphics information which is to be respectively superimposed on the left view and the right view at the time of the 3D service (except for the 2D display mode). In this case, the graphics generation unit 222 imparts a parallax by adjusting a superimposed position of the graphics information to be superimposed on each view, based on the parallax information obtained by the parallax information decoder 223. Further, the graphics generation unit 222 generates data of graphics information to be superimposed on the view for the two-dimensional image display, at the time of the 2D service (including the 2D display mode at the time of the 3D service).

The graphics buffer 224a temporarily accumulates data of graphics information to be superimposed on the left view, which is generated in the graphics generation unit 222 at the time of the 3D service (except for the 2D display mode). Further, the graphics buffer 224a temporarily accumulates data of graphics information to be superimposed on the view for two-dimensional image display, which is generated in the graphics generation unit 222 at the time of the 2D service (including the 2D display mode at the time of the 3D service). Further, the graphics buffer 224b temporarily accumulates data of graphics information to be superimposed on the right view, which is generated in the graphics generation unit 222 at the time of the 3D service (except for the 2D display mode).

The scalers 218a and 218b respectively adjust the output resolutions of the video streams (image data) of respective views which are output from the view buffers 217a and 217b to a predetermined resolution. Four-bit field of "indication_of_picture_size_scaling_horizontal" indicating a horizontal pixel ratio of a decoded picture and four-bit field of "indication_of_picture_size_scaling_vertical" indicating a vertical pixel ratio of a decoded picture are present in the configuration information described above. The CPU 201 controls a scaling ratio in the scalers 218a and 218b based on the pixel ratio information, and obtains a predetermined resolution.

The video superimposing unit 219a outputs a video stream (image data) SL for displaying a left view (left image) on which graphics information is superimposed at the time of the 3D service (except for the 2D display mode). At this time, the video superimposing unit 219a superimposes data of graphics information accumulated in the graphics buffer 224a on the video stream of the left view which is accumulated in the view buffer 217a and subjected to a scaling process in the scaler 218a to obtain the video stream SL.

Further, the video superimposing unit 219a outputs a video stream (image data) SV for displaying a view for two-dimensional image display on which graphics information is superimposed at the time of the 2D service (including the 2D display mode at the time of the 3D service). At this time, the video superimposing unit 219a superimposes data of graphics information accumulated in the graphics buffer 224a on the video stream of the view for the two-dimensional image display which is accumulated in the view buffer 217a and subjected to a scaling process in the scaler 218a to obtain the video stream SV.

Further, the video superimposing unit 219a outputs a video stream (image data) SR for displaying a right view (right image) on which graphics information is superimposed at the time of the 3D service (except for the 2D display mode). At this time, the video superimposing unit 219b superimposes data of graphics information accumulated in the graphics buffer 224b on the video stream of the right view which is accumulated in the view buffer 217b and subjected to a scaling process in the scaler 218b to obtain the video stream SR.

The audio decoder 225 performs the reverse process of the audio encoder 114 (see Fig. 3) of the transmission data generation unit 110 described above. In other words, the audio decoder 225 performs a decoding process on the encoded voice data included in the audio elementary stream extracted by the demultiplexer 214 to obtain the decoded voice data. The channel processing unit 226 generates and outputs voice data SA of each channel to make, for example, 5.1 ch surround or the like, for the voice data obtained in the audio decoder 225.

In addition, if the video stream (image data) of each view is read from the view buffers 217a and 217b, the reading of data of graphics information corresponding to each view from the graphics buffers 224a and 224b is performed based on a timestamp PTS, and thus transfer synchronism is achieved.

The operation of the receiver 200 will be described briefly. Television broadcast signals which are input to the antenna terminal 211 are supplied to the digital tuner 212. The digital tuner 212 processes the television broadcast signals to output a predetermined transport stream TS corresponding to the selection channel of the user. The transport stream TS is temporarily accumulated in the TS buffer 213.

The demultiplexer 214 extracts each elementary stream of video, parallax information, graphics and an audio from the transport stream TS temporarily accumulated in the TS buffer 213. The parallax information elementary stream is extracted only when the video elementary stream included in the transport stream TS includes the video streams of two views of the left eye and the right eye for the three-dimensional image display (image data).

Further, the demultiplexer 214 extracts substream configuration descriptor which is inserted under the layer of the transport stream TS, for example, under the Video Elementary Loop of PMT or under EIT so as to be supplied to the CPU 201. The CPU 201 performs a control to secure a required area as an area (decoded buffer area) of the coded buffer 215 in a unit of an event (program) based on the descriptor. In addition, it is considered that the control to secure the decoded buffer area is performed in a time unit smaller than the event unit, for example, a scene unit. In this case, for example, the control can be performed based on the substream configuration data (Substream_configuration_data()) which is inserted in the layer of the video stream in a time unit smaller than the event unit.

The video elementary stream extracted by the demultiplexer 214 is temporarily accumulated in the coded buffer 215. The video decoders 216a and 216b perform a decoding process on the video elementary stream stored in the coded buffer 215 to obtain a video stream (image data) of a predetermined view. Here, the video decoder 216a obtains the video stream of the view for the two-dimensional image display, or the video stream of the left view for the three-dimensional image display. In contrast, the video decoder 216b obtains the video stream of the right view for the three-dimensional image display.

Further, the video decoders 216a and 216b extract substream configuration data (Substream_configuration_data()) which is inserted in a unit of a picture or in a unit of a GOP, using the layer of a video stream, for example, the user data area so as to be supplied to the CPU 201. The CPU 201 controls the operations of the video decoders 216a and 216b or the like in a unit of a picture or in a unit of a GOP, based on the data.

Below, the operation at the time of the 3D service (except for the 2D display mode) will be described first. The video stream (image data) of the left view for the three-dimensional image display is obtained from the video decoder 216a, and the video stream is temporarily accumulated in the view buffer 217a. Further, the video stream (image data) of the right view for the three-dimensional image display is obtained from the video decoder 216b, and the video stream is temporarily accumulated in the view buffer 217b.

The graphics elementary stream extracted by the demultiplexer 214 is supplied to the graphics decoder 221. The graphics decoder 221 performs a decoding process on the encoded graphics data included in the graphics elementary stream to obtain the decoded graphics data (including subtitle data). The graphics data is supplied to the graphics generation unit 222.

The parallax information elementary stream extracted by the demultiplexer 214 is supplied to the parallax information decoder 223. The parallax information decoder 223 performs a decoding process on the encoded parallax information included in the parallax information elementary stream to obtain the decoded parallax information. The parallax information is supplied to the graphics generation unit 222.

The graphics generation unit 222 generates data of the graphics information which is to be superimposed on the image, based on the graphics data obtained by the graphics decoder 221. In this case, the graphics generation unit 222 imparts a parallax by adjusting a superimposed position of the graphics information to be superimposed on each view of the left view (left image) and the right view (right image), based on the parallax information obtained in the parallax information decoder 223.

The data of the graphics information which is generated in the graphics generation unit 222 and is to be superimposed on the left view is temporarily accumulated in the graphics buffer 224a. Further, the data of the graphics information which is generated in the graphics generation unit 222 and is to be superimposed on the right view is temporarily accumulated in the graphics buffer 224b.

The video superimposing unit 219a superimposes data of graphics information which is accumulated in the graphics buffer 224a on the video stream (image data) of the left view which is accumulated in the view buffer 217a and subjected to a scaling process in the scaler 218a to obtain the video stream (image data) SL of the left view. The video stream SL is output as the video stream for displaying the left view (left image) on which the graphics information is superimposed.

Further, the video superimposing unit 219b superimposes data of graphics information which is accumulated in the graphics buffer 224b on the video stream (image data) of the right view which is accumulated in the view buffer 217b and subjected to a scaling process in the scaler 218b to obtain the video stream (image data) SR of the right view. The video stream SR is output as the video stream for displaying the right view (left image) on which the graphics information is superimposed.

Next, the operation at the time of the 2D service (including the 2D display mode at the time of the 3D service) will be described. The video stream (image data) of the view for the two-dimensional image display is obtained from the video decoder 216a, and the video stream is temporarily accumulated in the view buffer 217a.

The graphics elementary stream extracted in the demultiplexer 214 is supplied to the graphics decoder 221. The graphics decoder 221 performs a decoding process on the encoded graphics data included in the graphics elementary stream to obtain the decoded graphics data (including subtitle data). The graphics data is supplied to the graphics generation unit 222.

The graphics generation unit 222 generates data of graphics information which is to be superimposed on the view (image), based on the graphics data obtained in the graphics decoder 221. The data of the graphics information is temporarily accumulated in the graphics buffer 224a.

The video superimposing unit 219a superimposes data of graphics information which is accumulated in the graphics buffer 224a on video stream (image data) of the view for the two-dimensional image display which is accumulated in the view buffer 217a and subjected to a scaling process in the scaler 218a to obtain the video stream (image data) of the view for the two-dimensional image display SV. The video stream SV is output as the video stream for displaying the view (image) for two-dimensional image display on which the graphics information is superimposed.

Further, the audio elementary stream extracted by the demultiplexer 214 is supplied to the audio decoder 225. The audio decoder 225 performs a decoding process on the encoded voice data included in the audio elementary stream to obtain the decoded voice data. The voice data is supplied to the channel processing unit 226. The channel processing unit 226 generates and outputs voice data SA of each channel to make, for example, 5.1ch surround or the like, for the voice data.

In addition, in the receiver 200 as shown in Fig. 19, the coded buffer 215 is shown as one block. Although not described above, the coded buffer 215 may have two aspects including one aspect in which the coded buffer 215 is shared by two video decoders 216a and 216b according to an elementary stream configuration, and the other aspect in which the coded buffer 215 is managed by being divided into two in a form of being occupied by respective video decoders 216a and 216b.

As described above, a substream configuration descriptor and substream configuration data including the configuration information of the video stream of each view is inserted in the transport stream TS received by the receiver 200 shown in Fig. 19. In the receiver 200, the process of each unit is controlled based on the configuration information. Therefore, a proper and efficient process is possible.

### <2. Modification Example>

In addition, in the embodiment described above, the present technology is applied to an example that handles two views of the left eye and the right eye. However, it is of course that the present technology can be applied similarly even in the case in which multi views are handled.

Further, in the embodiment described above, an example is described in which the container is a transport stream (MPEG-2 TS). However, the present technology can be applied similarly even to a system of a configuration in which the container is delivered to the reception terminal using a network such as the Internet. In the delivery through the Internet, the transport stream TS is likely to be delivered in a container of MP4 or other formats. In other words, the container corresponds to containers of variable formats such as a transport stream (MPEG-2 TS) adopted in a digital broadcasting standard, MP4 which is used in the delivery through the Internet.

Further, although an example is described in the embodiment described above in which the superimposed information is graphics, a case of other types of superimposed information such as closed caption is considered similarly. Furthermore, although an example is described in the embodiment described above in which image data as well as graphics data are transmitted from a transmission side, a case is considered in which the data of superimposed information is an OSD display generated in the reception side.

Further, the present technology can take the following configurations.
(1) A transmission device including:
   a transmission unit that transmits a container of a predetermined format in which a video stream of a single view for a two-dimensional image display and video streams of a plurality of views for a three-dimensional image display are included in a time division manner; and
   a configuration information insertion unit that inserts configuration information of a video stream of each view included in the container, in the container.
(2) The transmission device according to (1), further including:
   an insertion layer selection unit that selects a single or a plurality of layers in which the configuration information is inserted.
(3) The transmission device according to (2),
   wherein a layer of the container and a layer of the video stream are included in an option of an insertion layer of the configuration information.
(4) The transmission device according to any one of (1) to (3),
   wherein the configuration information includes information identifying whether a video stream included in the container is the video stream of the single view for the two-dimensional image display or the video streams of the plurality of views for the three-dimensional image display.
(5) The transmission device according to any one of (1) to (4),
   wherein the configuration information includes information indicating whether video streams of the plurality of views are inserted in a single video elementary stream or not.
(6) The transmission device according to any one of (1) to (5),
   wherein the configuration information includes information indicating whether data of video streams of the plurality of views is interleaved in a single picture or not.
(7) The transmission device according to any one of (1) to (6),
   wherein the configuration information includes information indicating view allocation.
(8) The transmission device according to any one of (1) to (7),
   wherein the configuration information includes information indicating whether a video stream has a view required for the two-dimensional image display or not.
(9) The transmission device according to any one of (1) to (8),
   wherein the configuration information includes pixel ratio information regarding a predetermined horizontal and/or vertical resolution.
(10) The transmission device according to any one of (1) to (9),
   wherein the container is a transport stream.
(11) The transmission device according to any one of (1) to (10),
   wherein the plurality of views for the three-dimensional image display is two views including a left view and a right view.
(12) The transmission device according to any one of (1) to (11),
   wherein when video streams of the plurality of views are inserted in a single video elementary stream, information indicating a boundary between views is located between video streams of respective views.
(13) A transmission method including:
   a transmission step of transmitting a container of a predetermined format in which a video stream of a single view for a two-dimensional image display and video streams of a plurality of views for a three-dimensional image display are included in a time division manner; and
   a configuration information insertion step of inserting configuration information of a video stream of each view included in the container, in the container.
(14) A reception device including:
   a reception unit that receives a container of a predetermined format in which a video stream of a single view for a two-dimensional image display and video streams of a plurality of views for a three-dimensional image display are included in a time division manner,
   wherein configuration information of a video stream of each view included in the container is inserted in the container, and
   wherein the reception device further includes an image data acquisition unit that decodes a video stream of each view to acquire image data, based on the configuration information, from the container.
(15) The reception device according to (14),
   wherein the image data acquisition unit secures decoded buffer area, based on the configuration information that is inserted in an event unit or in a time unit smaller than the event unit.
(16) A reception method including:
   a reception step of receiving a container of a predetermined format in which a video stream of a single view for a two-dimensional image display and video streams of a plurality of views for a three-dimensional image display are included in a time division manner,
      wherein configuration information of a video stream of each view included in the container is inserted in the container, and
      wherein the reception method further includes an image data acquisition step of decoding a video stream of each view to acquire image data, based on the configuration information, from the container.

The major characteristics of the present technology is to enable a proper and efficient process at a reception side by allowing configuration information indicating the configuration of a video stream of each view to be inserted in a predetermined layer which is selected, when a video transport stream of each view is transmitted in a container such as a transport stream in a 2D service and a 3D service (see Fig. 5 to Fig. 7).

### Reference Signs List

- 10: IMAGE TRANSMISSION AND RECEPTION SYSTEM
- 100: BROADCAST STATION
- 110: TRANSMISSION DATA GENERATION UNIT
- 111: DATA EXTRACTION UNIT
- 111a: DATA RECORDING MEDIUM
- 112: VIDEO ENCODER
- 113: PARALLAX INFORMATION ENCODER
- 114: AUDIO ENCODER
- 115: GRAPHICS GENERATION UNIT
- 116: GRAPHICS ENCODER
- 117: MULTIPLEXER
- 200: RECEIVER
- 201: CPU
- 202: FLASH ROM
- 203: DRAM
- 204: INTERNAL BUS
- 205: REMOTE CONTROL RECEPTION UNIT
- 206: REMOTE CONTROL TRANSMITTER
- 211: ANTENNA TERMINAL
- 212: DIGITAL TUNER
- 213: TRANSPORT STREAM BUFFER (TS BUFFER)
- 214: DEMULTIPLEXER
- 215: CODED BUFFER
- 216a, 216b: VIDEO DECODER
- 217a, 217b: VIEW BUFFER
- 218a, 218b: SCALER
- 219a, 219b: VIDEO SUPERIMPOSING UNIT
- 221: GRAPHICS DECODER
- 222: GRAPHICS GENERATION UNIT
- 223: PARALLAX INFORMATION DECODER
- 224a, 224b: GRAPHICS BUFFER
- 225: AUDIO DECODER
- 226: CHANNEL PROCESSING UNIT

## Claims

1. A transmission device comprising:
a transmission unit that transmits a container of a predetermined format in which a video stream of a single view for a two-dimensional image display and video streams of a plurality of views for a three-dimensional image display are included in a time division manner; and
a configuration information insertion unit that inserts configuration information of a video stream of each view included in the container, in the container.

2. The transmission device according to Claim 1, further comprising:
an insertion layer selection unit that selects a single or a plurality of layers in which the configuration information is inserted.

3. The transmission device according to Claim 2,
wherein a layer of the container and a layer of the video stream are included in an option of an insertion layer of the configuration information.

4. The transmission device according to Claim 1,
wherein the configuration information includes information identifying whether a video stream included in the container is the video stream of the single view for the two-dimensional image display or the video streams of the plurality of views for the three-dimensional image display.

5. The transmission device according to Claim 1,
wherein the configuration information includes information indicating whether video streams of the plurality of views are inserted in a single video elementary stream or not.

6. The transmission device according to Claim 1,
wherein the configuration information includes information indicating whether data of video streams of the plurality of views is interleaved in a single picture or not.

7. The transmission device according to Claim 1,
wherein the configuration information includes information indicating view allocation.

8. The transmission device according to Claim 1,
wherein the configuration information includes information indicating whether a video stream has a view required for the two-dimensional image display or not.

9. The transmission device according to Claim 1, wherein the configuration information includes pixel ratio information regarding a predetermined horizontal and/or vertical resolution.

10. The transmission device according to Claim 1, wherein the container is a transport stream.

11. The transmission device according to Claim 1, wherein the plurality of views for the three-dimensional image display are two views including a left view and a right view.

12. The transmission device according to Claim 1, wherein when video streams of the plurality of views are inserted in a single video elementary stream, information indicating a boundary between views is located between video streams of respective views.

13. A transmission method comprising:
a transmission step of transmitting a container of a predetermined format in which a video stream of a single view for a two-dimensional image display and video streams of a plurality of views for a three-dimensional image display are included in a time division manner; and
a configuration information insertion step of inserting configuration information of a video stream of each view included in the container, in the container.

14. A reception device comprising:
a reception unit that receives a container of a predetermined format in which a video stream of a single view for a two-dimensional image display and video streams of a plurality of views for a three-dimensional image display are included in a time division manner,
wherein configuration information of a video stream of each view included in the container is inserted in the container, and
wherein the reception device further includes an image data acquisition unit that decodes a video stream of each view to acquire image data, based on the configuration information, from the container.

15. The reception device according to Claim 14,
wherein the image data acquisition unit secures decoded buffer area, based on the configuration information that is inserted in an event unit or in a time unit smaller than the event unit.

16. A reception method comprising:
a reception step of receiving a container of a predetermined format in which a video stream of a single view for a two-dimensional image display and video streams of a plurality of views for a three-dimensional image display are included in a time division manner,
wherein configuration information of a video stream of each view included in the container is inserted in the container, and
wherein the reception method further includes an image data acquisition step of decoding a video stream of each view to acquire image data, based on the configuration information, from the container.
